# EUROPEAN PATENT SPECIFICATION

(11) **EP 0 505 068 B1**
(45) Date of publication and mention of the grant of the patent: **14.05.1997**
(21) Application number: 92301997.0
(22) Date of filing: 09.03.1992
(51) Int. Cl.: B29C 65/00, A44B 19/16, B31B 19/90, B29C 53/16

(54) **Method of straightening heat seals on plastic film zipper bags**
Verfahren zur Planierung von Warmsiegelmassen auf mit Profilschlussstreifenkunststoffolieverpackungsbeuteln
Méthode de dégauchissement de joints soudés sur des sacs, à bandes complémentaires de fermeture, en film plastique

(30) Priority: 22.03.1991 US 674647
(43) Date of publication of application: 23.09.1992
(73) Proprietor: Tenneco Plastics Company, Evanston, Illinois 60204 (US)
(72) Inventor: Herrington, Fox John, Bloomfield, New York 14469 (US)
(74) Representative: Grünecker, Kinkeldey, Stockmair & Schwanhäusser Anwaltssozietät

(56) References cited:
- WO-A-87/02968
- US-A- 4 561 109
- US-A- 4 698 118
- US-A- 4 976 811
- PATENT ABSTRACTS OF JAPAN vol. 9, no. 275 (M-426)(1998) 2 November 1985 & JP-A-60 120 033 (TORAY KK) 27 June 1985

## Description

The present invention relates to a method and apparatus for securing first and second articles each comprising a flexible plastic layer. The invention particularly relates to a method and apparatus for securing a fastener, such as a zipper, to a plastic film bag.

Plastic zippers with or without sliders are well known in the art. The plastic zippers have profiles and include a pair of male and female fastener elements in the from of reclosable interlocking rib and groove elements. Where a slider is employed, the slider will open and close the rib and groove elements. In the manufacture of thermoplastic film bags, a pair of these male and female fastener elements extend along the mouth of the bags and these male and female elements are adapted to be secured in any suitable manner to the flexible walls of the thermoplastic film bags. While these elements may be integral marginal portions of such walls, the present invention is directed to bags where the zipper elements are extruded separately and thereafter attached to the walls along the mouth of the bag. Examples of plastic film zipper bags of this type are disclosed in US-A-3173184 and US-A-3259951.

In the manufacture of plastic film zipper bags of the type having an integral plastic fin and zipper, the bag film is heat sealed to the fin of the zipper track. Normally, the thickness of the bag film is small (about 1.75 mil - 0.044mm) compared to that of the fin (about 6 mil - 0.15mm). The heating and melting causes the fin and the film to shrink along the line of the seal, as the orientation of the plastic is relaxed. This causes an unsightly appearance, with puckering of the adjacent material, and a bending downward of the top portion of the bag. It is difficult to prevent this shrinkage by process conditions. It is an object of the present invention to overcome such shrinkage problem.

WO-A-87/02968, US-A-4976811, US-A-4698118 and US-A-4561109 are examples of patent specifications that disclose a method of securing two flexible plastic layers by heat sealing.

According to one aspect of the present invention there is provided a method of securing a first and second articles each comprising a flexible plastic layer, comprising heat sealing the layer of the first article to the layer of the second article thereby causing the layers of the articles to shrink along the line of the seal, cooling the seal area, and thereafter stretching the seal along the line to the original length corresponding to the length of the layers of the articles adjacent the seal area to thereby straighten the seal.

According to another aspect of the invention there is provided apparatus for securing a first and second article each comprising a flexible plastic layer, said apparatus comprising means for heat sealing the layer of the first article to the layer of the second article thereby causing the layers of the articles to shrink along the line of the seal, means for cooling the seal area, and means for stretching the seal along the line to the original length corresponding to the length of the layers of the articles adjacent the seal area to thereby straighten the seal.

Preferably the first article comprises a fastener and the second article comprises a plastic film bag. The fastener preferably includes a fin, which corresponds to the said layer of the first article and is heat sealed to the film. In this embodiment the film of the plastic bag corresponds to the layer of the second article.

The fastener is advantageously of the zipper type, and includes a pair of strips provided with reclosable interlocking male and female fastener elements. A separate fin may depend from each one of the strips.

In one embodiment the shrunk seal is selectively stretched back to the original length by pressing the seal between corrugating teeth causing only the seal area to take a longer path thereby elongating the shrunk seal to the original length. In this embodiment the means for stretching the seal comprises means having corrugating teeth for pressing only the seal between said corrugating teeth causing only the seal area to take a longer path thereby elongating the shrunk seal to the original length.

The corrugating teeth are on reciprocating mating bars or on mating rotating disks.

In another embodiment the seal is stretched by passing it through successive nip wheels having the width of the seal with the second wheel running faster than the first. In this embodiment the means for stretching the seal comprises said pair of nip wheels.

In another embodiment the seal is stretched by passing the layer of the second article between successive nip rolls running at the same speed as said layer and between the rolls diverting the path of the seal to increase its path length as compared to the path length of the remainder of the film. In this embodiment the apparatus includes successive nip rolls, and means is located between said rolls for diverting the path of the seal to increase its path length as compared to the path length of the remainder of the film.

The path length of the seal can be increased by diverting the path of the seal over an idler roll having a circumferential portion engaging the seal of larger diameter than the remainder of the idler roll, in which case the means located between said roll comprises the idler roll; or by pulling the seal over finger structure positioned to increase the path length of the seal as compared to the path length of the remainder of the layer of the second article, in which case the means located between said roll comprises the finger structure.

Reference is now made to the accompanying drawings, in which:
Fig. 1 is a diagrammatic view of a system for straightening the zipper fin seal in accordance with the present invention;
Fig. 1A is a view illustrating the effect of the shrinkage after the heat sealing of the zipper fin seal;
Fig. 1B is a view illustrating the zipper fin seal after straightening;
Fig. 2 is a diagrammatic view of a modification of the stretching station in the system illustrated in Fig. 1;
Fig. 3 is a diagrammatic view of another modification of the stretching station in the system for straightening the zipper fin seal illustrated in Fig. 1;
Fig. 4 is a diagrammatic view of a further modification of the stretching station in the system illustrated in Fig. 1; and
Fig. 5 is a diagrammatic view of another modification of the stretching station in the system illustrated in Fig. 1.

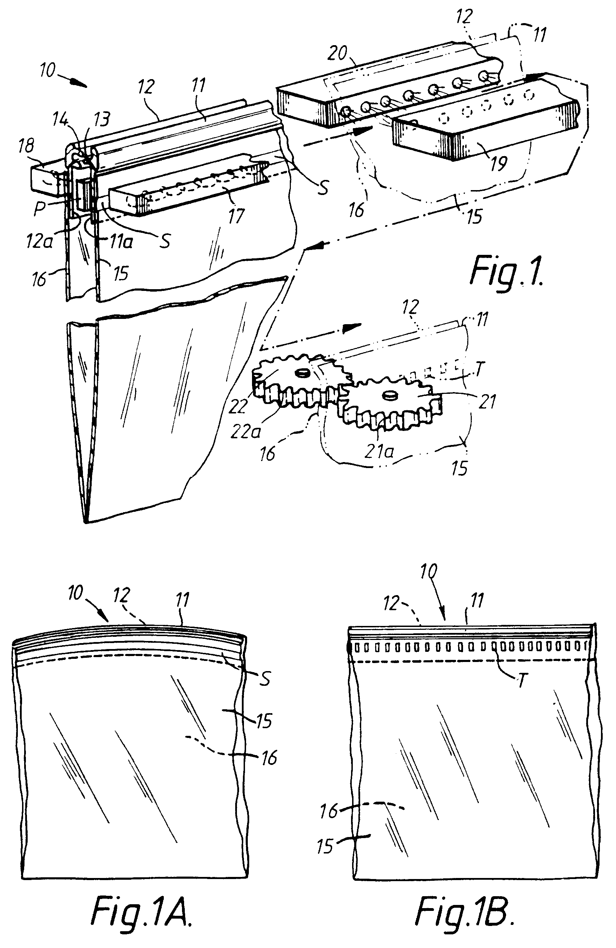

Referring to Fig. 1 there is diagrammatically illustrated a system for straightening the zipper fin seal in accordance with the present invention. There is illustrated a profiled plastic reclosable fastener or zipper 10 particularly suited for use in connection with thermoplastic bags and the like. The zipper 10 is adapted to be assembled at the top edge or mouth of a thermoplastic bag. The bag may be made from any suitable thermoplastic film such for example as polyethylene or polypropylene or equivalent material. In the preferred form of the invention the bag is made from extruded polyethylene film having a thickness of about 1.75 mill (0.044mm) and the zipper is made from extruded polyethylene with a fin having a thickness of about 6 mil (0.15mm).

The zipper 10 comprises a pair of flexible plastic strips 11 and 12 having separable plastic means extending along the length thereof comprising reclosable interlocking male and female profile elements in the form of rib and groove elements 13 and 14 on the respective strips. Each of the extruded strips 11 and 12 includes a thin fin section or portion 11a, 12a depending therefrom and which are adapted to be inserted between the spaces walls 15, 16 of a centre folded thermoplastic film to form a web from which a plurality of bags are to be made. This creates a four-layer region at one edge of the web comprising film 15, fin 11a, fin 12a, and film 16.

The web including the four-layer region is pulled (by means not shown) in the direction of the arrow through a heat sealing station including spaced hot air jets 17, 18 which weld the outer film layers 15 and 16 to the adjacent fins 11a and 12a along continuous seal lines S. A plate P is positioned between the fins 11a, 12a at the sealing station to prevent fusing the fins to each other. The seals S of the web are then passed through a cooling station where they are cooled with chilled air jets 19 and 20.

The plastic fins 11a, 12a have a high machine direction orientation as they come from the zipper extrusion process. The application of heat to seal the film to the fin causes this orientation to relax resulting in undesirable shrinkage of the fins 11a, 12a in the seal region S in the machine direction. This is illustrated in Fig. lA where there is a puckering of the material adjacent the seal line S and a bending down of the zipper 10. To counter this effect, the seal S is stretched back to its original length after cooling by running it through a stretching station which includes a pair of mating spur gears 21, 22 having a width corresponding to the width of the seal line S. The gears 21, 22 each have a profile which engages the seal S including rounded teeth 21a, 22a to prevent damaging the film web and the fins along the seal line S. The result is a straight web with embossed appearance of zipper teeth T as illustrated in Fib. 1B

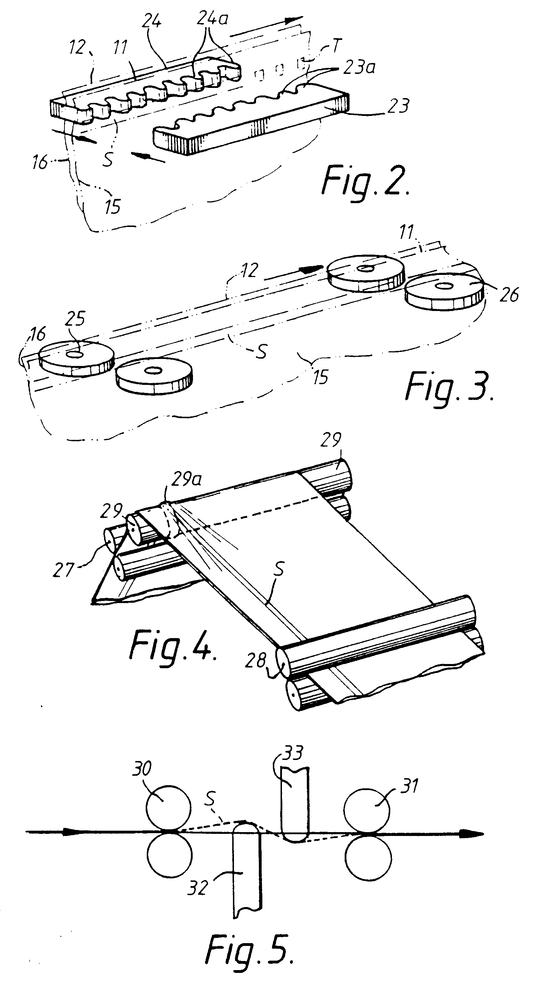

Referring to Fig. 2 there is diagrammatically illustrated a modification of the stretching station in the system illustrated in Fig. 1. The heat sealing and cooling stations are the same as those illustrated in Fig. 1. The difference in the two systems is in the stretching station where the seal S is stretched along the seal line to the original length corresponding to the length of the film and zipper adjacent the seal area to thereby straighten the seal. At the stretching station the mating gear wheels 21 and 22 of the system shown in Fig. 1 have been replaced by mating gear racks 23 and 24 having meshing teeth 23a and 24a respectively.

The seal S is stretched back to its original length after cooling by pressing it between the pair of mating gear racks 23 and 24. The gear racks are adapted for reciprocation toward and away from each other and the seal S is advanced intermittently between the gear racks 23 and 24. The teeth 23a and 24a on the gear racks have profiles which prevent damaging the film web and fins on the zipper. After the web passes through the gear racks 23, 24 at the stretching station, the result is a straightened web with embossed appearance of zipper teeth similar to that shown in Fig. 1B.

Referring to Fig. 3 there is diagrammatically illustrated another modification of the stretching station in the system for straightening the zipper fin seal illustrated in Fig. 1. The heat sealing station and the cooling station are the same as those illustrated in Fig. 1. The basic difference in the systems is at the stretching station. In the system of Fig. 3 after the film web and fins leave the heat sealing and cooling stations the seals S pass through successive nip wheels 25, 26. It will be noted that the nip wheels 25 and 26 have a width that corresponds to the width of the seal S. The second nip wheel 26 is driven at a faster speed than the first nip wheel 25 thereby stretching the seal S back to its original length. The result is a straight web similar to Fig. 1B but without the embossed appearance.

Referring to Fig. 4 there is diagrammatically illustrated a further modification of the stretching station in the system illustrated in Fig. 1. In this system the heat sealing station and the cooling station are the same as those illustrated in Fig. 1 and the change again is made only at the stretching station. In this system after the film web and fins leave the heat sealing and cooling stations they run between full-width nip rolls 27, 28 running at the same speed as the film. Between the nip rolls 27, 28 is an idler roll 29 which diverts the path of the seal S to increase its path length as compared to the path length of the remainder of the film. The length of the seal S is increased by diverting the path of the seal S over the idler roll 29 having a raised circumferential portion 29a engaging the seal S of a larger diameter than the remainder of the idler roll 29. This causes the seal S to stretch back to its original length resulting in a straight web similar to Fig. 1B but without the embossed appearance.

Referring to Fig. 5, there is diagrammatically illustrated another modification of the stretching station in the system illustrated in Fig. 1. In this system, the heat sealing station and the cooling station are the same as those illustrated in Fig. 1 and the change is made only at the stretching station. In this system after the film web and ends leave the heat sealing and cooling stations they run between full-width nip rolls 30 and 31 running at the same speed as the film. The nip rolls 30 and 31 are similar to the nip rolls 27 and 28 of Fig. 4.

However, in place of the idler roll 29 of Fig. 4 there is positioned between the nip rolls 30 and 31 in Fig. 5 a pair of fingers 32 and 33 which divert the path of the seal S to increase its path length as compared to the path length of the remainder of the film. The length of the seal S is increased by diverting the path of the seal S over the fingers 32 and 33 which have a width corresponding to the width of the seal S. This causes the seal S to stretch back to its original length resulting in a straight web similar to Fig. 1b but without the embossed appearance.

It is to be understood that after the web has been straightened and leaves the stretching station of the system it is ready to be processed into completed bags with the conventional side seals. As pointed out above, the zipper may be provided with sliders such for example as disclosed in WO-91/13564.

While a preferred embodiment and certain modifications of the invention have been described and illustrated, it is to be understood that further modification thereof may be made within the scope of the ** appended claims. For example while both of the seals S are illustrated as being stretched with each other, the seals S can be stretched individually by opening the zipper 10 and stretching each seal S at separate stretching stations. While the present invention has been described in connection with the manufacture of plastic film zipper bags, it is to be understood that the invention is applicable to other types of articles which have a plurality of flexible plastic layers to be heat sealed to each other where at least one of the layers has an orientation in the direction of the seal. In practising the present invention, the at least one oriented layer is heat sealed to another of the layers thereby causing both layers to shrink along the line of the seal. The seal area is then cooled and thereafter the seal is stretched along the line to the original length corresponding to the length of the layers adjacent the seal area to thereby straighten the seal. The apparatus described and illustrated herein is suitable for practising the method on other thermoplastic articles as well as plastic film zipper bags.

## Claims

1. A method of securing first (11,12) and second (15,16) articles each comprising a flexible plastic layer, comprising heat sealing the layer of the first article to the layer of the second article thereby causing the layers of the articles to shrink along the line (5) of the seal, characterised by cooling the seal area, and thereafter stretching the seal along the line to the original length of the layers of the articles adjacent the seal area to thereby straighten the seal.

2. A method according to claim 1, wherein the first article comprises a fastener and the second article comprises a plastic film bag.

3. A method according to claim 2, wherein the fastener includes a fin (11a,12a), and said fin is heat sealed to the film.

4. A method according to claim 1, 2 or 3, wherein the shrunk seal is selectively stretched back to the original length by pressing the seal between corrugating teeth (21a, 22a or 23a,24a) causing only the seal area to take a longer path thereby elongating the shrunk seal to the original length.

5. A method according to claim 4, wherein the corrugating teeth (23a,24a) are on reciprocating mating bars (23,24).

6. A method according to claim 4, wherein the corrugating teeth (21a,22a) are on mating rotating disks (21,22).

7. A method according to claim 1, 2 or 3, wherein the seal is stretched by passing it through successive nip wheels (25,26) having the width of the seal with the second wheel (26) running faster than the first (25).

8. A method according to claim 1, 2 or 3, wherein the seal is stretched by passing the layer of the second article between successive nip rolls (27,28) running at the same speed as said layer and between the rolls diverting the path of the seal to increase its path length as compared to the length of the remainder of the film.

9. A method according to claim 8, wherein the path length of the seal is increased by diverting the path of the seal over an idler roll (29) having a circumferential portion engaging the seal of larger diameter than the remainder of the idler roll.

10. A method according to claim 8, wherein the path length of the seal is increased by pulling the seal over a finger structure (32,33) positioned to increase the path of the seal as compared to the path length of the remainder of the layer of the second article.

11. Apparatus for securing first (11,12) and second (15,16) articles each comprising a flexible plastic layer, said apparatus comprising means (17,18) for heat sealing the layer of the first article to the layer of the second article thereby causing the layers of the articles to shrink along the line (5) of the seal, characterised by means (19,20) for cooling the seal area, and means for stretching the seal along the line to the original length corresponding to the length of the layers of the articles adjacent the seal area to thereby straighten the seal.

12. Apparatus according to claim 11, wherein the first article comprises a fastener and the second article comprises a plastic film bag.

13. Apparatus according to claim 12, wherein the fastener includes a fin (11a,12a) and said fin is heat sealed to the film.

14. Apparatus according claim 11, 12 or 13, wherein said means for stretching of the seal comprises means having corrugating teeth (21a,22a or 23a,24a) for pressing only the seal between said corrugating teeth causing only the seal area to take a longer path thereby elongating the shrunk seal to the original length.

15. Apparatus according to claim 14, wherein said corrugating teeth (23a,24a) are on reciprocating mating bars (23,24).

16. Apparatus according to claim 14, wherein said corrugating teeth (21a,22a) are on mating rotating disks (21,22).

17. Apparatus according to claim 11, 12 or 13, wherein said means for stretching the seal comprises a pair of nip wheels (25,26) through which the seal passes, said nip wheels having the width of the seal with the second wheel (26) running faster than the first (25).

18. Apparatus according to claim 11,12 or 13, including successive nip rolls (27,28) wherein the seal is stretched by passing the film between said successive nip rolls running at the same speed as the film, and means located between said rolls for diverting the path of the seal to increase its path length as compared to the path length of the remainder of the film.

19. Apparatus according to claim 18, wherein said means located between said rolls for diverting the path of the seal comprises an idler roll (29) having a circumferential portion engaging the seal of larger diameter than the remainder of the idler roll.

20. Apparatus according to claim 18, wherein said means located between said rolls for diverting the path of the seal comprises a finger structure (32,33) positioned to increase the path length of the seal as compared to the path length of the remainder of the film.

## Patentansprüche

1. Verfahren zum Verbinden eines ersten (11,12) und zweiten Elementes (15, 16), die beide eine flexible Kunststoffschicht umfassen, das Warmschweißen der ersten Schicht des ersten Elementes an die Schicht des zweiten Elementes umfaßt, wobei dabei die Schichten der Elemente zum Schrumpfen entlang der Linie (5) der Schweißnaht gebracht werden, **gekennzeichnet durch** Kühlen des Schweißnahtbereiches und anschließendes Dehnen der Schweißnaht entlang der Linie auf die Originallänge der Schichten der Elemente angrenzend des Schweißnahtbereiches, um dabei die Schweißnaht zu strecken.

2. Verfahren nach Anspruch 1, worin das erste Element ein Verschlußelement und das zweite Element einen Kunststoffolienbeutel umfaßt.

3. Verfahren nach Anspruch 2, worin das Verschlußelement einen Steg (11a, 12b) aufweist und der Steg mit der Folie warmverschweißt ist.

4. Verfahren nach Anspruch 1, 2 oder 3, worin die geschrumpfte Schweißnaht wahlweise zu der Originallänge durch Pressen der Schweißnaht zwischen kämmenden Zähnen (21a, 22a oder 23a, 24a) zurückgedehnt wird, wobei nur der Schweißnahtbereich dazu gebracht wird, einen längeren Weg zu nehmen, um dabei die geschrumpfte Schweißnaht auf ihre Originallänge zu verlängern.

5. Verfahren nach Anspruch 4, worin die kämmenden Zähne (23a, 24a) auf hin- und herbewegenden Zahnstangen (23, 24) angeordnet sind.

6. Verfahren nach Anspruch 4, worin die kämmenden Zähne (21a, 22a) auf Zahndrehscheiben (21, 22) angeordnet sind.

7. Verfahren nach Anspruch 1, 2 oder 3, worin die Schweißnaht gedehnt wird durch Hindurchführen durch nacheinanderfolgende Quetschräder (25, 26), die die Breite der Schweißnaht aufweisen und wobei das zweite Rad (26) schneller läuft als das erste (25).

8. Verfahren nach Anspruch 1, 2 oder 3, worin die Schweißnaht gedehnt wird durch Hindurchführen der Schicht des zweiten Elementes zwischen nacheinander angeordneten Quetschrollen (27, 28), die mit der gleichen Geschwindigkeit laufen, wie die Folie und wobei zwischen den Quetschrollen der Weg der Schweißnaht umgelenkt wird, um ihre Wegstrecke im Vergleich zu der Länge der übrigen Folie zu erhöhen.

9. Verfahren nach Anspruch 8, worin die Wegstrecke der Schweißnaht sich erhöht durch Umlenken des Weges der Schweißnaht über eine Laufrolle (29) mit einem Umfangsbereich, der mit der Schweißnaht in Berührung steht und einen größeren Durchmesser als der Rest der Laufrolle aufweist.

10. Verfahren nach Anspruch 8, worin die Wegstrecke der Schweißnaht erhöht ist durch Ziehen der Schweißnaht über einen Fingeraufbau (32, 33), der angeordnet ist, um den Weg der Schweißnaht im Vergleich zur Wegstrecke des Rests der Schicht des zweiten Elementes zu verlängern.

11. Vorrichtung zum Verbinden eines ersten (11, 12) und zweiten Elementes, die beide eine flexible Kunststoffschicht umfassen, wobei die Vorrichtung Einrichtungen (17, 18) zum Warmschweißen der Schicht des ersten Elementes an der Schicht des zweiten Elementes umfaßt, wobei dabei die Schichten der Elemente zum Schrumpfen entlang einer Linie (5) der Schweißnaht gebracht werden, **gekennzeichnet durch** Einrichtungen (19, 20) zum Kühlen des Schweißnahtbereiches, und Einrichtungen zum Dehnen der Schweißnaht entlang der Linie auf die Originallänge, die der Länge der Schichten der Elemente, angrenzend des Schweißnahtbereichs entspricht, um dabei die Schweißnaht zu strecken.

12. Vorrichtung nach Anspruch 11, worin das erste Element ein Verschlußelement, und das zweite Element einen Kunststoffolienbeutel umfaßt.

13. Vorrichtung nach Anspruch 12, worin das Verschlußelement einen Steg (11a, 12a) umfaßt und der Steg mit der Folie warmverschweißt wird.

14. Vorrichtung nach Anspruch 12 oder 13, worin die Einrichtungen zum Dehnen der Schweißnaht Einrichtungen mit kämmenden Zähnen (21a, 22a oder 23a, 24a) zum Pressen lediglich der Schweißnaht zwischen den kämmenden Zähnen umfaßt, wobei nur der Schweißnahtbereich dazu gebracht wird, einen längeren Weg einzunehmen und dabei die geschrumpfte Schweißnaht zu der Originallänge zu verlängern.

15. Vorrichtung nach Anspruch 14, worin die kämmenden Zähne (22a, 24a) auf hin- und herbewegenden Zahnstangen (23, 24) angeordnet sind.

16. Vorrichtung nach Anspruch 14, worin die kämmenden Zähne (21a, 22a) auf Zahndrehscheiben (21, 22) angeordnet sind.

17. Vorrichtung nach Anspruch 11, 12 oder 13, worin die Einrichtung zum Dehnen der Schweißnaht ein paar Quetschräder (25, 26) umfaßt, durch welche die Schweißnaht hindurchgeführt ist, wobei die Quetschrollen die Breite der Schweißnaht aufweisen und das zweite Rad (26) schneller läuft als das erste (25).

18. Vorrichtung nach Anspruch 11, 12 oder 13, die nacheinander angeordnete Quetschrollen (27, 28) umfaßt, worin die Schweißnaht durch Hindurchführen der Folie zwischen den nacheinander angeordneten Rollen, die mit der gleichen Geschwindigkeit wie die Folie laufen, gedehnt wird, und Einrichtungen zwischen den Rollen zum Lenken des Wegs der Schweißnaht umfaßt, um ihre Wegstrecke im Vergleich zu der Wegstrecke des Restes der Folie zu erhöhen.

19. Vorrichtung nach Anspruch 19, worin die Einrichtung, die zwischen den Rollen zum Umlenken des Weges der Schweißnaht angeordnet ist, eine Führungsrolle (29) aufweist, die einen Umfangsbereich, der die Schweißnaht berührt, von größerem Durchmesser als der Rest der Führungsrolle aufweist.

20. Vorrichtung nach Anspruch 18, worin die Einrichtungen, die zwischen den Rollen zum Umlenken des Weges der Schweißnaht angeordnet sind, einen Fingeraufbau (32, 33) umfassen, der angeordnet ist, um die Wegstrecke der Schweißnaht im Vergleich zu der Wegstrecke des Rests der Folie zu verlängern.

## Revendications

1. Procédé de fixation de premier (11, 12) et second (15, 16) articles chacun comprenant une couche en plastique flexible, comprenant le scellement thermique de la couche du premier article sur la couche du second article pour ainsi faire en sorte que les couches des articles se retrécissent suivant la ligne (S) du scellement, caractérisé par le refroidissement de la zone de scellement et ensuite par l'étirement du scellement, le long de la ligne, jusqu'à la longueur originale des couches des articles adjacente à la zone de scellement pour ainsi renforcer le scellement.

2. Procédé selon la revendication 1, dans lequel le premier article comprend un moyen de fixation et le second article comprend une poche en film plastique.

3. Procédé selon la revendication 2, dans lequel le moyen de fixation inclut une ailette (11a, 12a) et ladite ailette est scellée thermiquement sur le film.

4. Procédé selon la revendication 1, 2 ou 3, dans lequel le scellement rétréci est étiré sélectivement pour être amené à la longueur originale en pressant le scellement entre des dents de crantage (21a, 22a ou 23a, 24a) de manière à faire en sorte que seule la zone de scellement prenne un chemin plus long, pour ainsi allonger le scellement rétréci jusqu'à la longueur originale.

5. Procédé selon la revendication 4, dans lequel les dents de crantage (23a, 24a) sont sur des barres conjuguées en va-et-vient (23, 24).

6. Procédé selon la revendication 4, dans lequel les dents de crantage (21a, 22a) sont sur des disques tournants conjugués (21, 22).

7. Procédé selon la revendication 1, 2 ou 3, dans lequel le scellement est étiré en le faisant passer au travers de roues de pincement successives (25, 26) présentant la largeur du scellement, la seconde roue (26) avançant plus vite que la première (25).

8. Procédé selon la revendication 1, 2 ou 3, dans lequel le scellement est étiré en passant la couche du second article entre des rouleaux de pincement successifs (27, 28) qui avancent à la même vitesse que ladite couche ainsi qu'entre les rouleaux deviant la voie du scellement pour augmenter sa longueur de chemin par comparaison avec la longueur du reste du film.

9. Procédé selon la revendication 8, dans lequel la longueur de chemin du scellement est augmentée en déviant la voie du scellement sur un rouleau fou (29) comportant une partie circonférencielle qui vient en contact avec le scellement de diamètre plus important que le reste du rouleau fou.

10. Procédé selon la revendication 8, dans lequel la longueur de chemin du scellement est augmentée en tirant le scellement sur une structure à doigts (32, 33) positionnée de manière à augmenter le chemin du scellement par comparaison avec la longueur de chemin du reste de la couche du second article.

11. Appareil de fixation de premier (11, 12) et second (15, 16) articles chacun comprenant une couche en plastique flexible, ledit appareil comprenant des moyens (17, 18) pour sceller thermiquement la couche du premier article sur la couche du second article pour ainsi faire en sorte que les couches des articles se rétrécissent le long de la ligne (S) du scellement, caractérisé par des moyens (19, 20) pour refroidir la zone de scellement et par des moyens pour étirer le scellement le long de la ligne jusqu'à la longueur originale correspondant à la longueur des couches des articles adjacente à la zone de scellement pour ainsi renforcer le scellement.

12. Appareil selon la revendication 11, dans lequel le premier article comprend un moyen de fixation et le second article comprend une poche en film plastique.

13. Appareil selon la revendication 12, dans lequel le moyen de fixation inclut une ailette (11a, 12a) et ladite ailette est scellée thermiquement sur le film.

14. Appareil selon la revendication 11, 12 ou 13, dans lequel lesdits moyens d'étirement du scellement comprennent des moyens comportant des dents de crantage (21a, 22a ou 23a, 24a) pour presser seulement le scellement entre lesdites dents de crantage de manière à faire en sorte que seule la zone de scellement prenne un chemin plus long pour ainsi allonger le scellement rétréci jusqu'à la longueur originale.

15. Appareil selon la revendication 14, dans lequel lesdites dents de crantage (23a, 24a) sont sur des barres conjuguées en va-et-vient (23, 24).

16. Appareil selon la revendication 14, dans lequel lesdites dents de crantage (21a, 22a) sont sur des disques tournants conjugués (21, 22).

17. Appareil selon la revendication 11, 12 ou 13, dans lequel lesdits moyens d'étirement du scellement comprennent une paire de roues de pincement (25, 26) au travers desquelles le scellement passe, lesdites roues de pincement présentant la largeur du scellement, la seconde roue (26) avançant plus vite que la première (25).

18. Appareil selon la revendication 11, 12 ou 13, incluant des rouleaux de pincement successifs (27, 28), dans lequel le scellement est étiré en passant le film entre lesdits rouleaux de pincement successifs qui avancent à la même vitesse que le film et des moyens situés entre lesdits rouleaux pour dévier la voie du scellement pour augmenter sa longueur de chemin par comparaison avec la longueur de chemin du reste du film.

19. Appareil selon la revendication 18, dans lequel lesdits moyens situés entre lesdits rouleaux pour dévier la voie du scellement comprennent un rouleau fou (29) comportant une partie circonférencielle qui vient en contact avec le scellement de diamètre plus important que le reste du rouleau fou.

20. Appareil selon la revendication 18, dans lequel lesdits moyens situés entre lesdits rouleaux pour dévier la voie du scellement comprennent une structure à doigts (32, 33) positionnée pour augmenter la longueur de chemin du scellement par comparaison avec la longueur de chemin du reste du film.
